# EUROPÄISCHE PATENTSCHRIFT

(11) **EP 1 763 211 B1**
(45) Veröffentlichungstag und Bekanntmachung des Hinweises auf die Patenterteilung: **10.07.2013**
(21) Anmeldenummer: 06018751.5
(22) Anmeldetag: 07.09.2006
(51) Int. Cl.: H04M 3/42

(54) **Verfahren, bei dem während eines Anrufs, Client-Software zum Aufbau von Rich-Call Verbindungen als Download zur Verfügung gestellt wird.**
Method in which, during a call, client software for setting up Rich-Call connections is made available for download.
Procédé dans lequel, au cours d'un appel, un logiciel client pour l'établissement d' appel riches est rendu disponible par téléchargement.

(30) Priorität: 09.09.2005 DE 102005042977
(43) Veröffentlichungstag der Anmeldung: 14.03.2007
(73) Patentinhaber: Deutsche Telekom AG, 53113 Bonn (DE)
(72) Erfinder: Hasemann, Jörg-Michael, Dr., 27321 Emtinghausen (DE)
(74) Vertreter: Maiwald Patentanwalts GmbH

(56) Entgegenhaltungen:
- EP-A- 1 263 204
- EP-A1- 1 427 238
- WO-A-03/009547
- WO-A-03/015380
- WO-A1-2004/068880
- COULOMBE S ET AL: "MULTIMEDIA ADAPTATION FOR THE MULTIMEDIA MESSAGING SERVICE" IEEE COMMUNICATIONS MAGAZINE, IEEE SERVICE CENTER,NEW YORK, NY, US, Bd. 42, Nr. 7, Juli 2004 (2004-07), Seiten 120-126, XP001200773 ISSN: 0163-6804
- SCHLAPFER ET AL: "Mobile Applications with J2ME A White Paper", WHITE PAPER ERICSSON, XX, XX, 7 July 2001 (2001-07-07), pages 1-26, XP002223102,

## Beschreibung

Die vorliegende Erfindung betrifft ein Verfahren sowie ein System zur Übertragung von Daten in einem Telekommunikationssystem mit einem Multimediaserver für eine Unterstützung von Sprachanrufen mit Multimediafunktionen, wobei über den Multimediaserver zumindest zwei Kommunikationsendgeräte miteinander verbindbar sind und zumindest das Kommunikationsendgerät eines anrufenden Teilnehmers A multimediafähig ist, und wobei der Multimediaserver den multimedialen Anruf einleitet und dem Kommunikationsendgerät des angerufenen Teilnehmers B den multimedialen Anruf signalisiert.

Das Einsatzgebiet der vorliegenden Erfindung erstreckt sich auf den Telekommunikationsbereich und insbesondere auf den Mobilfunkbereich. Die multimediale Unterstützung von Sprachanrufen an Mobiltelefonen wird im Allgemeinen als Rich-Call bezeichnet, wobei darunter insbesondere multimediale Anrufsszeriarien verstanden werden, bei denen der traditionelle Sprachanruf um neuartige multimediale Inhalte und Effekte bereichert wird. Diese Effekte können z.B. Klingeltöne und optische Anrufsignalisierungen sein, bei denen Bildchen, Videoclips und/oder Animationen im Handydisplay angezeigt werden, wobei auch die Übertragung von Bild- und/oder Videoinformationen parallel zum Sprachanruf bei der Verwendung eines Mobiltelefons mit einer Kamera übertragen werden können (See-What-I-See). Die multimediale Unterstützung von Sprachanrufen kann damit vielfältige Effekte umfassen, welche entweder technisch nutzbarer Natur sind oder der Unterhaltung dienen.

Aus dem allgemeinen Stand der Technik sind derartige Verfahren zur multimedialen Unterstützung von Sprachanrufen an Mobiltelefonen bekannt und werden für mobile Kommunikationsendgeräte angeboten. Das mobile Kommunikationsendgerät muss zu diesem Zweck mit einer speziellen Software ausgestattet werden, welche als Mobiltelefonseitige Client-Software (MCS) bezeichnet wird.

Gemäß dem Stand der Technik bildet die MCS die Benutzerschnittstelle des Systems mit den Teilnehmern (user interface). Sie erlaubt den Teilnehmern Rich-Calls aufzubauen und anzunehmen, hierzu kann die MCS auf das Telefonbuch im Mobiltelefonbuch zugreifen und dem Benutzer erlauben, einen anzurufenden Teilnehmer auszuwählen. Des Weiteren erlaubt die MCS dem Benutzer, multimedialen Inhalt, der lokal vorgehalten wird, als Begleitinformation für den Rich-Call auszuwählen. Bei diesem multimedialen Inhalt kann es sich beispielsweise um Klingeltöne, Anrufanimationen/-clips (Animationen/Clips, die beim Angerufenen im Display während der Anrufsignalisierung erscheinen), Begleitanimationen/-clips (Animationen/Clips, die beim Angerufenen im Display während des Anrufes erscheinen) oder Hintergrundmusik/-geräusche, die während des Anrufs zugemischt werden, handeln. Des Weiteren gibt die MCS dem Teilnehmer eine Information über den Status des Verbindungsaufbaus. Weiterhin ist die MCS als Mediaplayer für die Wiedergabe multimedialer Begleitinformationen nutzbar. Die MCS wirkt mit einem Multimediaserver zusammen, welcher die Rich-Calls verwaltet. Der Multimediaserver wird im allgemeinen Sprachgebrauch als Rich-Call-Community-Server (RCCS) bezeichnet, wobei dieser Audiobegleitinformationen, wie beispielsweise Hintergrundgeräusche, die während oder zum Schluss eines Anrufs zum Einsatz kommen, entsprechend der Begleitinformationen einmischt. Der Multimediaserver stellt damit eine zentrale Einrichtung für die Anwendung von Rich-Calls dar. Bei Rich-Calls liegt der Multimediaserver zwischen dem angerufenen und dem anrufenden Teilnehmer, d.h., dass die Rich-Call- Verbindungsstrecke über den Multimediaserver läuft und somit die Verbindung zwischen einem anrufenden und einem angerufenen Teilnehmer zwei Verbindungsstrecken umfasst, wobei die eine zwischen dem anrufenden Teilnehmer und dem Multimediaserver und die andere Verbindung zwischen dem Multimediaserver und dem angerufenen Teilnehmer aufgebaut wird. Die Einleitung der Rich-Calls geschieht ebenfalls durch den Multimediaserver, wobei die Anrufanforderungen vom Multimediaserver angenommen werden und gegenüber dem anzurufenden Teilnehmern signalisiert werden.

Dabei tritt das Problem auf, dass zum Aufbau von Rich-Call-Verbindungen eine Mobiltelefonseitige Client Software (MCS) erforderlich ist. Die (MCS) ist verantwortlich für das Erkennen der Anrufanforderungen und das Annehmen von Rich-Call-Anrufen. Damit sind Teilnehmer, welche ein Kommunikationsendgerät nutzen, welches nicht über die MCS-Software verfügt, von der Nutzung der multimedialen Unterstützung von Sprachanrufen ausgeschlossen. Der Verbindungsaufbau kann aufgrund der nicht vorhandenen MCS-Software nicht stattfinden. Die MCS-Software des anrufenden Teilnehmers prüft über den Rich-Call-Community-Server (RCCS), ob der anzurufende Teilnehmer bereits in der Rich-Call-Community registriert ist. Bei einem anzurufenden Teilnehmer, welcher nicht in der Rich-Call-Community registriert ist, kann eine Verbindung mit multimedialen Begleitinformationen nicht aufgebaut werden.

Im Stand der Technik finden sich zwar Dokumente bei denen die multimedialen Informationen an das Endgerät des Angerufenen entsprechend angepasst warden. So offenbart WO 03/015380 einen sogenannten "In-Band Alert Dialogue Transport" bei dem die multimedialen Informationen im Sprachkanal übermittelt werden. Allerdings offenbart kein Dokument wie dem Angerufenen, der volle Funktionsumfang eines Rich-Calls im Zuge der Anrufzustellung verfügbar gemacht werden kann.

Es ist daher die Aufgabe der vorliegenden Erfindung, ein Verfahren zur Übertragung von Daten in einem Telekommunikationssystem zu schaffen, welches begleitend zum Sprachanruf eine volle multimediale Unterstützung der Kommunikationsverbindung auch zwischen Teilnehmern ermöglicht, dessen Kommunikationsendgeräte bei-eingehendem Anruf noch keine Mobiltelefonseitige Client-Software (MCS) aufweisen.

Diese Aufgabe wird ausgehend von einem verfahren zur Übertragung von Daten in einem Telekommunikationssystem gemäß dem Oberbegriff des Anspruchs 1 und einem System gemäß dem Oberbegriff des Anspruch 8 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass das Verfahren zur Übertragung von Daten in einem Telekommunikationssystem die folgenden Verfahrensschritte umfasst :
- Aufbau einer Verbindung durch den Multimediaserver mit einem nicht oder vermindert multimediafähigen Kommunikationsendgerät des angerufenen Teilnehmers B durch eine Signalisierung, wobei die Signalisierung des Aufbaus der Verbindung mit einem Standardsignal ausgeführt wird,
- Meldung durch das nicht oder vermindert multimediafähige Kommunikationsendgerät des angerufenen Teilnehmers B an den Multimediaserver, dass das angerufene Kommunikationsendgerät keine oder nur eine verminderte Multimediafähigkeit aufweist, wobei die Meldung mittels Textbenachrichtigung erfolgt,
- Erkennung durch den Multimediaserver, dass das Kommunikationsendgerät nicht oder vermindert multimediafähig ist,
- Anpassung des Umfangs der Multimediafunktionen an den möglichen Funktionsumfang des nicht oder vermindert multimediafähigen Kommunikationsendgerätes durch den Multimediaserver,
- Anwendung einer zumindest eingeschränkten Unterstützung von Sprachanrufen mit Multimediafunktionen.

Die Anwendung eines Standardsignals zum Aufbau der Verbindung geschieht damit wie bei einem üblichen Telefonanruf, wobei es auch dann zu einer Anrufsignalisierung kommt, wenn für den angerufenen Teilnehmer kein PDP-Kontext besteht, diese also nicht für die Datendienste registriert ist. Somit können Nicht-Rich-Call-Teilnehmer transparent teilnehmen, wobei die multimediale Begleitung der Sprachanrufe in einem eingeschränkten Funktionsumfang anwendbar ist. Dabei erhält der Rich-Call-Community-Server (Multimediaserver) die Information, dass der angerufene Teilnehmer kein Rich-Call-Teilnehmer ist, wobei der Rich-Call-Community-Server den Anrufenden direkt durchstellen kann. Der Rich-Call-Community-Server kann vor dem Durchstellen des Sprachkanals Audiobegleitanrufsignalisierungen des anrufenden Teilnehmers einmischen. Somit sind auch für Nicht-Rich-Call-Teilnehmer multimediale Begleitinformationen während eines Sprachanrufs möglich. Zur Erkennung des Umfangs der möglichen multimedialen Funktionen erfolgt eine Meldung durch das nicht oder zumindest vermindert multimediafähige Kommunikationsendgerät des angerufenen Teilnehmers B an den Multimediaserver, dass das angerufene Kommunikationsendgerät keine oder nur eine verminderte Multimediafähigkeit aufweist. Die Meldung kann dabei mittels SMS/MMS erfolgen (Short Message Service / Mail Management System). Der Multimediaserver erkennt dabei, dass das Kommunikatiönsendgerät des angerufenen Teilnehmers nicht oder nur vermindert multimediafähig ist, wobei dieser den Umfang der Multimediafunktionen an dem möglichen Funktionsumfang des nicht oder vermindert multimediafähigen Kommunikationsendgeräts anpasst. Somit ist eine Anwendung einer zumindest eingeschränkten Unterstützung von Sprachanrufen mit Multimediafunktionen möglich.

Eine weitere die Erfindung verbessernde Maßnahme sieht vor, dass für einen Sprachanruf zwischen dem Multimediaserver und einem nicht oder vermindert multimediafähigen Kommunikationsendgerät eines angerufenen Teilnehmers B ein ISDN- und/oder GSM-Standard und zum Aufbau der Verbindung ein Paging- Signal verwendet wird. Diese Standards sind von zumindest den meisten sich im Gebrauch befindenden Kommunikationsendgeräten nutzbar, so dass im Wesentlichen alle Teilnehmer innerhalb eines Netzes zumindest mit vermindertem Umfang multimediale Funktionen nutzen können.

Vorteilhafterweise wird für die Übertragung von Statusinformationen und/oder Begleitinformationen und/oder multimedialen Daten und/oder Sprachinformationen zwischen einem multimediafähigen Kommunikationsendgerät eines anrufenden Teilnehmers A und dem Multimediaserver eine Datenübertragung nach dem GPRS- und /oder UMTS- Standard verwendet. Diese Standards bieten die Möglichkeit der parallelen Übertragung von Daten während eines Sprachanrufs mit hoher Geschwindigkeit. Dabei bedeutet ein GPRS- Standard einen General Packet Radio Service, welcher Daten beim Sender in einzelne Pakete umwandelt, als solche überträgt und beim Empfänger wieder zusammensetzt. Ein UMTS- Standard beschreibt hingegen ein universal Mobile Telekommunikation System, welches neben konventioneller Sprachübertragung erweiterte multimediale Dienste, Nachrichtendienste, eine erweiterte Informationsverteilung sowie eine hochbandbreitige Datenübertragung umfasst.

Eine weitere die Erfindung verbessernde Maßnahme sieht vor, dass die Multimediafähigkeit eines Kommunikationsendgeräts auf einer auf diesem installierten Mobiltelefonseitigen Client-Software (MCS) basiert, wobei sprachinformationen seitens der Mobiltelefonseitigen Client-Software (MCS) und dem Multimediaserver bevorrechtigt übertragen werden. Hierfür kann auf Port-Basis zwischen Sprach- und anderen Daten unterschieden werden und dem Sprach-Port entsprechende Priorität zugewiesen werden. Dies kann Client-seitig aber auch RCCS-seitig, d.h. Router-seitig erfolgen. Damit wird sichergestellt, dass der Sprachanruf unabhängig von der Übertragung multimedialer Daten aufrechterhalten werden kann, ohne die Übertragung des Sprachanrufs vom Funktionsumfang der Übertragung multimedialer Daten abhängig zu machen.

Vorteilhafterweise prüft der Multimediaserver und/oder die Mobiltelefonseitige Client-Software (MCS) des angerufenen Teilnehmers B, ob die vom anrufenden Teilnehmer A gesendete, bzw. gewünschte multimediale Information bereits auf dem Kommunikationsendgerät des angerufenen Teilnehmers B vorhanden ist, wobei diese erst bei einem Nichtvorhandensein übertragen wird. Hierzu erfolgt unmittelbar eine Signalisierung der Mobiltelefonseitigen-Client-Software (MCS) des angerufenen Teilnehmers an den Multimediaserver zur Abfrage der weiteren Teilnehmerinformationen. Ein Ausbleiben der Signalisierung identifiziert den angerufenen Teilnehmer als Nicht-Rich-Call-Teilnehmer. Weiterhin kann mit der Überprüfung der multimedialen Begleitinformationen auf dem Mobiltelefon des angerufenen Teilnehmers eine Reduktion der insgesamt zu übertragenen Daten erreicht werden.

Vorteilhafterweise werden durch den Multimediaserver zumindest zwei Audiostreams vermischt, um den Audiostream des anrufenden Teilnehmers A mit einem im Multimediaserver hinterlegten und/oder erzeugten Audiostream zu vermischen. Es ist somit möglich, den Audiostream des Anrufers mit einem vom Multimediaserver erzeugten Audiostream zu hinterlegen, und diesen dem angerufenen Teilnehmer zuzuleiten. Dadurch ist es möglich, den Anruf mit Hintergrundgeräuschen /-musik zu hinterlegen, ohne dass die Begleitinformation /-musik o.ä. einen separaten Übertragungskanal erfordert.

Weiterhin wird vorgeschlagen, dass mittels des Multimediaservers die Teilnehmer verwaltet werden, welche an Sprachanrufen mit Multimediafunktionen teilnehmen, wobei der Multimediaserver die Berechtigungen von anrufenden und /oder angerufenen Teilnehmern zur Teilnahme bzw. zur Nutzung von Sprachanrufen mit Multimediafunktion prüft. Dafür verfügt der Multimediaserver über einen Speicher, in dem die Teilnehmer und die den Teilnehmern hinterlegten Daten gespeichert werden können.

Die multimedialen Funktionen umfassen dabei zumindest die Auswahl des Klingeltons des angerufenen Teilnehmers B durch den anrufenden Teilnehmer A. Weiterhin kann die multimediale Funktion zumindest während des Sprachanrufs die Bestimmung zumindest einer Animation und/oder eines Hintergrundgeräusches auf dem Telekommunikationsgerät des angerufenen Teilnehmers B durch den anrufenden Teilnehmer A umfassen. Ebenso ist die Möglichkeit gegeben, dass die multimedialen Funktionen zumindest während eines Sprachanrufs den Austausch von Grafiken und/oder Fotoaufnahmen und/oder Textinformationen umfassen. Fotoaufnahmen können insbesondere mit einer im Kommunikationsendgerät integrierten Kamera erfolgen, wobei Textinformationen über die Eingabemittel, wie beispielsweise einer Tastatur eines Kommunikationsendgeräts eingegeben werden können.

Vorteilhafterweise erfasst der Multimediaserver die angewendeten Multimediafunktionen, erstellt Rechnungslegungsinformationen und leitet diese an zumindest ein Leistungsabrechnungssystem weiter. Damit können sogenannte Billing-Systeme mit Rechnungslegungsinformationen versorgt werden, um eingesetzte multimediale Funktionen begleitend zum Sprachanruf gegenüber den Teilnehmern im Telekommunikationsnetz abzurechnen.

Nach einer möglichen Weiterbildung der Erfindung wird vorgeschlagen, dass der Multimediaserver eine Downloadplattform umfasst, um multimediale Funktionen für einen Download an zumindest einem Kommunikationsendgerät bereitzustellen. Damit ist es möglich, dass vom Multimediaserver die Mobiltelefonseitige Client-Software (MCS) auf das Kommunikationsendgerät als Download zur Verfügung gestellt werden kann, um diese ggf. für das Kommunikationsendgerät zu betreiben. Weiterhin ist es möglich, multimediale Funktionen, wie Animationen, Audiostreams, Grafiken, Fotos oder Klingeltöne über den Multimediaserver in Form einer Downloadplattform zur Verfügung zu stellen.

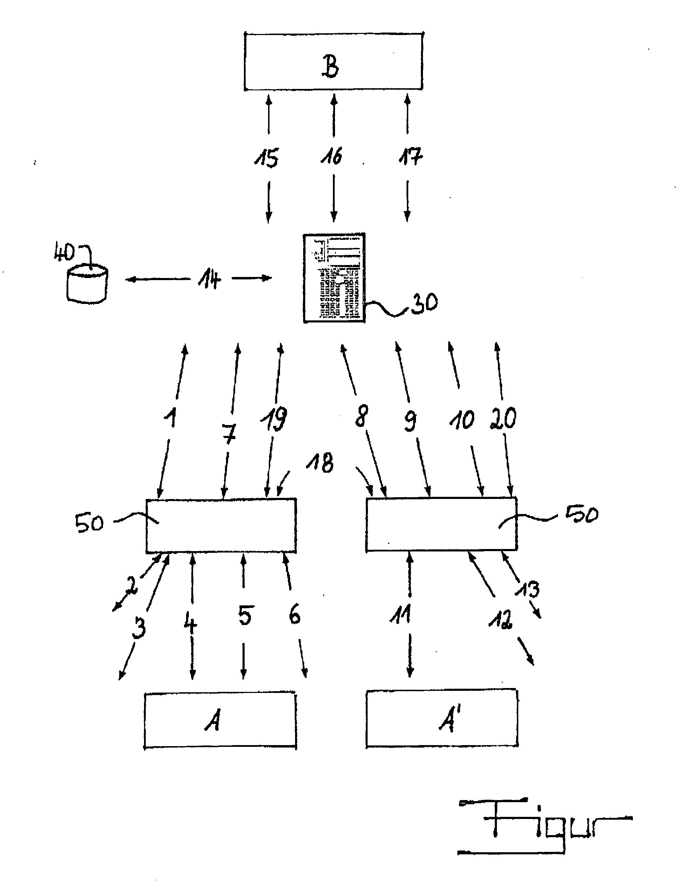

Weitere, die Erfindung verbessernde Maßnahmen sind in den Unteransprüchen angegeben oder werden nachstehend gemeinsam mit der Beschreibung eines bevorzugten Ausführungsbeispiels der Erfindung anhand der einzigen Figur näher dargestellt. Es zeigt die:
- Figur: eine Ansicht eines Verfahrens zur Übertragung von Daten mit einem Multimediaserver.

Die Figur zeigt das Verfahren zur Übertragung von Daten in einem Telekommunikationssystem mit einem Multimediaserver 30 für eine Unterstützung von Sprachanrufen mit Multimediafunktion. Im Folgenden entsprechen die Bezugszeichen den aufeinanderfolgenden Schritten des Aufbaus der multimedialen Verbindung. Dabei wird der Aufbau zwischen einem anrufenden Teilnehmer A und einem weiteren Teilnehmer A' beschrieben, wobei diese beiden Teilnehmer gemäß dem Stand der Technik über die Mobiltelefonseitige Client-Software (MCS) verfügen. Der angerufene Teilnehmer B verfügt hingegen über ein Kommunikationsendgerät, welches keine Rich-Call-Funktionen aufweist, da keine Mobiltelefonseitige Client- Software (MCS)eingerichtet ist. Seitens des anrufenden Teilnehmers A wird damit ein Mobiltelefon verwendet, welches über eine Mobiltelefonseitige Client-Software (MCS) 50 verfügt, wobei Rich-Call-Anwendungen mit dem Kommunikationsendgerät des weiteren Teilnehmers A' ebenfalls über eine Mobiltelefonseitige Client-Software (MCS) 50 verfügt. Gemäß der vorliegenden Erfindung ist es einem angerufenen Teilnehmer B mit einem Kommunikationsendgerät ohne Mobiltelefonseitige Client-Software (MCS) möglich, mit einem zumindest eingeschränkten Funktionsumfang über den Rich-Call-Community-Server (RCCS) zu kommunizieren.

Zunächst erfolgt eine Teilnehmerprüfung 1, wobei geprüft wird, ob der anrufende Teilnehmer A Subscriber, d.h. Berechtigter der Rich-Call-Community ist. Über einen Telefonbuchzugriff 2 wählt der anrufende Teilnehmer A einen anzurufenden Teilnehmer aus. Anschließend erfolgt ein Speicherzugriff 3, wobei auf gecashte multimediale Infos zugegriffen wird, um diese für eine Anwendung bzw. Übertragung auszuwählen. Danach folgt die Teilnehmerauswahl 4 und anschließend eine Multimediafunktionswahl 5, bei der die multimediale Begleitinformation, wie Klingelton, ein Klingel-Videoclip o.ä. ausgesucht wird, um diese beim angerufenen Teilnehmer A' bzw. B anzuwenden. Eine Statusmeldung 6 gibt ggf. eine Information über den Verbindungsaufbau wieder. Sämtliche Informationen werden dabei über ein Anzeigemittel am Kommunikationsendgerät dem anrufenden Teilnehmer A angezeigt.

Zum Aufbau der Rich-Call-Verbindung erfolgt eine Identifikation 7 der multimedialen Begleitinformation. Wenn diese auf dem Kommunikationsendgerät des angerufenen Teilnehmers A' nicht vorhanden ist, wird diese ggf. mit der Identifikation 7 übertragen. Anschließend signalisiert der Rich-Call-Community-Server über eine Signalisierung 8 den Rich-Call-Anruf gegenüber dem Kommunikationsendgerät des angerufenen Teilnehmers A'. Dabei werden die Teilnehmerinformationen durch eine Teilnehmerinformationsübermittlung 9 übertragen. Die durch die Identifikation 7 übermittelten Daten werden nun vom Multimediaserver 30 an das Kommunikationsendgerät mit der Mobiltelefonseitigen Client-Software (MCS) 50 übertragen, wobei eine Identifikation der multimedialen Begleitinformation und ggf. der Übertragung derselben erfolgt. Sobald das Kommunikationsendgerät des angerufenen Teilnehmers A' die multimedialen Begleitinformationen identifiziert hat, erfolgt eine multimediale Anrufsignalisierung 11, wobei diese auch als Anrufhintermalung erfolgen kann. Dabei werden die multimedialen Funktionen im Kommunikationsendgerät des angerufenen Teilnehmers A' aktiviert und dem Teilnehmer angezeigt bzw. auf dem Kommunikationsendgerät abgespielt. Als Reaktion darauf ist es dem angerufenen Teilnehmer A' möglich, über sein Kommunikationsendgerät bzw. die darauf installierte Mobiltelefonseitige Clierit-Software (MCS) 50 zu nutzen, um einen Speicherzugriff 12 auf lokal gecashte multimediale Informationen zu tätigen. Weiterhin ist es dem angerufenen Teilnehmer A' möglich, einen Telefonbuchzugriff 13 zu wählen, wobei der Name des anrufenden Teilnehmers A auf dem Anzeigemittel des Kommunikationsendgeräts des Teilnehmers A' anzeigbar wird.

Der Multimediaserver 30 kann über einen Speicherzugriff 14 auf einen Speicher 40 zugreifen, um gecashte multimediale Informationen aus dem Speicher zu entnehmen.

Erfolgt nun ein Anruf an einen angerufenen Teilnehmer B mit einem Kommunikationsendgerät, welches keine Mobiltelefonseitige Client-Software (MCS) aufweist, kann die Signalisierung eines Rich-Call- Anrufs mittels eines Standard-GSM-Paging erfolgen. Dieses Paging-Signal 15 ist auch von einem Kommunikationsendgerät erfassbar, da es auf einem GSM- und/oder ISDN-Standard beruht. Dafür ist keine Mobiltelefonseitige Client-Software (MCS) erforderlich, so dass ein Teilnehmer B mit einem Kommunikationsendgerät, welches die MCS-Software nicht umfasst, ebenfalls Teilnehmer in einer Rich-Call-Community werden kann. Dabei kann der Teilnehmer B beispielsweise eine SMS-Benachrichtigung erhalten. In dieser Benachrichtigung können dem Nicht-Rich-Call-Teilnehmer Informationen bzw. Links über Rich-Call mitgeteilt werden. Ein Inband-Voice-Trailer 17 kann entsprechend den Einstellungen des anrufenden Teilnehmers A beim angerufenen Teilnehmer B eingesetzt werden. Inband bedeutet im vorliegenden Zusammenhang eine Übertragung im eigentlichen Sprachkanal, was auch während eines Anrufes erfolgen kann, so dass die Trailer nicht auf die Anwendung einer Mobiltelefonseitigen Client-Software (MCS) basieren.

Ist sowohl beim anrufenden Teilnehmer A als auch beim angerufenen Teilnehmer A' eine Mobiltelefonseitige Client-Software (MCS) vorhanden, so kann ein Inband-Messaging 18 eingesetzt werden. Diese umfassen ein Starten, ein Stoppen oder eine sonstige Unterbrechung von Begleitaktivitäten, die Übermittlung von Texten (Chat), Foto-/Videoeinspielungen und dergleichen, wobei diese Verbindung als direkte Verbindung zwischen zwei Kommunikationsendgeräten erfolgen kann, ohne über den Multimediaserver übertragen und gemanagt zu werden. Dabei erfolgt durch den anrufenden Teilnehmer A mittels des Kommunikationsendgeräts eines Initialisierung 19, durch die die Sprachverbindungen eingestellt werden. Die Initialisierung kann auch als Initialisierung 20 beim Teilnehmer A' erfolgen, welcher ebenso einen Rich-Call- Anruf aufbauen kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 1: Teilnehmerprüfung
- 2: Telefonbuchzugriff
- 3: Speicherzugriff
- 4: Teilnehmerauswahl
- 5: Multimediafunktionswahl
- 6: Statusmeldung
- 7: Identifikation
- 8: Signalisierung
- 9: Teilnehmerinformationsübermittlung
- 10: Identifikation der multimedialen Begleitinfo
- 11: multimediale Anrufsignalisierung
- 12: Speicherzugriff
- 13: Telefonbuchzugriff
- 14: Zugriff aus Multimediafunktion
- 15: Paging-Signal
- 16: SMS- Benachrichtigung
- 17: Inband-Voice-Trailer
- 18: inband-Messaging
- 19: Initialisierung
- 20: Initialisierung
- 30: Multirtediaserver
- 40: Speicher
- 50: Mobiltelefonseitige Client Software (MCS)

- A: anrufender Teilnehmer
- A': weiterer Teilnehmer
- B: angerufener Teilnehmer

## Patentansprüche

1. Verfahren zur Übertragung von Daten in einem Telekommunikationssystem mit einem Multimediaserver **(30)** für eine Unterstützung von Sprachanrufen mit Rich-Call-Multimediafunktionen, wobei über den Multimediaserver **(30)** zumindest zwei Kommunikationsendgeräte miteinander verbunden werden, und zumindest das Kommunikationsendgerät eines anrufenden Teilnehmers **A** multimediafähig ist, und wobei der Multimediaserver den multimedialen Anruf einleitet und dem Kommunikationsendgerät des angerufenen Teilnehmers **B,** welches keine mobiltelefonseitige Client-Software (MCS) zum Aufbau von Rich-Call-Verbindungen aufweist, den multimedialen Anruf signalisiert,
mit folgenden Verfahrensschritten:
- Aufbau einer Verbindung durch den Multimediaserver **(30)** mit dem Kommunikationsendgerät des angerufenen Teilnehmers B durch eine Signalisierung, wobei die Signalisierung des Aufbaus der Verbindung mit einem Standardsignal ausgeführt wird,
- Meldung durch das Kommunikationsendgerät des angerufenen Teilnehmers B an den Multimediaserver, dass das angerufene Kommunikationsendgerät keine oder nur eine verminderte Multimediafähigkeit aufweist, wobei die Meldung mittels Textbenachrichtigung erfolgt,
- Erkennung durch den Multimediaserver **(30),** dass das Kommunikationsendgerät des Teilnehmers B nicht oder vermindert multimediafähig ist,
- Anpassung des Umfangs der Rich-Call-Multimediafunktionen an den möglichen Funktionsumfang des Kommunikationsendgeräts des angerufenen Teilnehmers B durch den Multimediaserver **(30),**
- Anwendung einer zumindest eingeschränkten Unterstützung von Sprachanrufen mit Multimediafunktionen,
**gekennzeichnet durch** folgende Verfahrensschritte:
- SMS-Benachrichtigung an das Kommunikationsendgerät des angerufenen Teilnehmers B, in welcher dem Nicht-Rich-Call-Teilnehmer B Informationen oder Links über Rich-Call mitgeteilt werden,
- Bereitstellen multimedialer Funktionen **durch** eine Downloadplattform des Multimediaservers (30), indem eine mobiltelefonseitige Client-Software (MCS) auf zumindest ein Kommunikationsendgerät als Download zur Verfügung gestellt wird, um diese für das Kommunikationsendgerät zu betreiben.

2. Verfahren nach Anspruch 1,
**dadurch gekennzeichnet, dass** für einen Sprachanruf zwischen dem Multimediaserver **(30)** und dem Kommunikationsendgerät des angerufenen Teilnehmers **B ein** ISDN- und /oder GSM- Standard und zum Aufbau der Verbindung ein Paging- Signal verwendet wird.

3. Verfahren nach Anspruch 1,
**dadurch gekennzeichnet, dass** für die Übertragung von Status informationen und /oder Begleitinformationen und /oder multimedialen Daten und /oder Sprachinformationen zwischen dem multimediafähigen Kommunikationsendgerät des anrufenden Teilnehmers **A** und dem Multimediaserver **(30)** eine Datenübertragung nach dem GPRS- und /oder UMTS- Standard verwendet wird.

4. Verfahren nach zumindest einem der vorgenannten Ansprüche,
**dadurch gekennzeichnet, dass** die Multimediafähigkeit eines Kommunikationsendgerätes auf einer auf diesem installierten Mobiltelefonseitigen Client Software (MCS) **(50)** basiert, wobei Sprachinformationen seitens der Mobiltelefonseitigen Client Software (MCS) **(50)** und dem Multimediaserver bevorrechtigt übertragen werden.

5. Verfahren nach zumindest einem der vorgenannten Ansprüche,
**dadurch gekennzeichnet, dass** durch den Multimediaserver **(30)** zumindest zwei Audiostreams vermischt werden, um den Audiostream des anrufenden Teilnehmers **A** mit einem im Multimediaserver hinterlegten und /oder erzeugten Audiostream zu vermischen.

6. Verfahren nach zumindest einem der vorstehenden Ansprüche,
**dadurch gekennzeichnet, dass** mittels des Multimediaservers **(30)** die Teilnehmer A, A' verwaltet werden, welche an Sprachanrufen mit Multimediafunktionen teilnehmen, wobei vom Multimediaserver **(30)** die Berechtigungen von anrufenden und/oder angerufenen Teilnehmern A, A', B zur Teilnahme bzw. Nutzung von Sprachanrufen mit Multimediafunktionen geprüft werden.

## Claims

1. A method of transmitting data in a telecommunication system including a multimedia server (30) for supporting voice calls with rich-call multimedia functions, wherein at least two communication terminals are connected with each other through the multimedia server (30) and the communication terminal of at least one calling subscriber A is multimedia capable, and wherein the multimedia server initiates the multimedia call and signals the multimedia call to the communication terminal of the called subscriber B, which does not have mobile-phone-side client software (MCS) for establishing rich-call connections,
comprising the steps of:
- establishing a connection through the multimedia server (30) with the communication terminal of the called subscriber B by means of signalling, wherein the signalling indicating the establishment of the connection is carried out by means of a standard signal,
- messaging by the communication terminal of the called subscriber B to the multimedia server that the called communication terminal has no or only limited multimedia capability, wherein the message is by means of text messaging,
- detecting by the multimedia server (30) that the communication terminal of subscriber B has no or only limited multimedia capability,
- adapting the scope of the rich-call multimedia functions to the possible functional scope of the communication terminal of the called subscriber B by the multimedia server (30),
- applying at least limited support of voice calls with multimedia functions, **characterised by** the steps of:
- text messaging to the communication terminal of the called subscriber B, in which information or links about rich-call are communicated to the non-rich-call subscriber B,
- providing multimedia functions through a download platform of the multimedia server (30) by providing a mobile-phone-side client software (MCS) on at least one communication terminal as a download, to operate said software for the communication terminal.

2. The method according to claim 1,
**characterised in that** an ISDN and/or GSM standard is used for a voice call between the multimedia server (30) and the communication terminal of the called subscriber B and a paging signal is used to establish the connection.

3. The method according to claim 1,
**characterised in that** data transmission according to the GPRS and/or UMTS standard is used for transmitting status information and/or additional information and/or multimedia data and/or voice information between the multimedia capable communication terminal of the calling subscriber A and the multimedia server (30).

4. The method according to at least one of the preceding claims,
**characterised in that** the multimedia capability of a communication terminal is based on a mobile-phone-side client software (MCS) (50) installed in said terminal, wherein voice information on the side of the mobile-phone-side client software (MCS) (50) and the multimedia server is transmitted in a prioritized manner.

5. The method according to at least one of the preceding claims,
**characterised in that** at least two audio streams are mixed by the multimedia server (30) in order to mix the audio stream of the calling subscriber A with an audio stream stored in and/or created by the multimedia server.

6. The method according to at least one of the preceding claims,
**characterised in that** the subscribers A, A' which participate in voice calls with multimedia functions are managed by the multimedia server (30), wherein the authorization of the calling and/or called subscribers A, A', B to participate in or use voice calls with multimedia functions is checked by the multimedia server (30).

## Revendications

1. Procédé de transfert de données dans un système de télécommunication avec un serveur multimédia (30) pour le support d'appels audio avec fonctions multimédia Rich-Call, par lequel au moins deux terminaux de communication, dont au moins le terminal de communication d'un participant A effectuant l'appel dispose de fonctionnalités multimédias, sont connectés l'un avec l'autre par le serveur multimédia (30) et par lequel le serveur multimédia envoie l'appel multimédia et le signalise au terminal de communication du participant B recevant l'appel, lequel ne dispose d'aucun logiciel client (MCS) du côté du téléphone mobile pour l'établissement de connexions Rich Call, comprenant les étapes suivantes :
- Établissement d'une connexion par le serveur multimédia (30) avec le terminal de communication du participant B recevant l'appel à travers une signalisation, la signalisation de l'établissement de la connexion étant effectuée avec un signal standard,
- Message par le terminal de communication du participant B recevant l'appel au serveur multimédia indiquant que le terminal de communication appelé ne dispose pas de fonctionnalités multimédias ou n'en dispose que dans une moindre mesure, le message étant livré sous forme de notification texte,
- Reconnaissance par le serveur multimédia (30) du fait que le terminal de communication du participant B ne dispose pas de fonctionnalités multimédias ou n'en dispose que dans une moindre mesure,
- Ajustement de la portée des fonctions multimédia Rich-Call à la portée des fonctions du terminal de communication du participant B recevant l'appel à travers le serveur multimédia (30),
- Application d'un support au moins restreint d'appels audio avec fonctions multimédia, **caractérisé par** les étapes suivantes :
- Notification par SMS au terminal de communication du participant B recevant l'appel dans laquelle les informations ou liens du participant B n'effectuant pas un appel Rich-Call sont partagées,
- Préparation des fonctions multimédia à travers une plateforme de téléchargement du serveur multimédia (30) par la mise à disposition du téléchargement du logiciel client (MCS) du côté du téléphone mobile à au moins un terminal de communication afin que ce logiciel puisse être opéré pour le terminal de communication.

2. Procédé selon la revendication 1,
**caractérisé en ce que**, pour un appel audio entre le serveur multimédia (30) et le terminal de communication du participant B recevant l'appel, un standard ISDN ou GSM est utilisé alors qu'un signal de téléavertissement est utilisé pour l'établissement de la connexion.

3. Procédé selon la revendication 1,
**caractérisé en ce qu'**un transfert de données d'après la norme GPRS ou UMTS est utilisé pour le transfert d'informations de statut ou d'informations associées ou de données multimédia ou d'informations vocales entre le terminal de communication aux fonctionnalités multimédia du participant A effectuant l'appel et le serveur multimédia (30).

4. Procédé selon la revendication 1,
**caractérisé en ce que** la fonctionnalité multimédia d'un terminal de communication se base sur un logiciel client du côté du téléphone mobile (MCS) (5) installé sur ce terminal, les informations vocales étant transférées de façon privilégiées du côté du logiciel client du côté du téléphone mobile (MCS) (50) et du serveur multimédia.

5. Procédé selon au moins l'une des revendications précédentes, **caractérisé en ce qu'**au moins deux flux audio sont mélangés à travers le serveur multimédia (30) afin de mélanger le flux audio du participant A effectuant l'appel avec un flux audio conservé ou généré dans le serveur multimédia.

6. Procédé selon au moins l'une des revendications précédentes, **caractérisé en ce que** le serveur multimédia (30) gère les participants A, A', qui participent à l'appel audio avec fonctions multimédia, les droits de participation ou d'utilisation d'appels audio avec fonctions multimédia des participants A, A', B effectuant/recevant l'appel étant contrôlé par le serveur multimédia (30).
